# EUROPEAN PATENT SPECIFICATION

(11) **EP 4 140 886 B1**
(45) Date of publication and mention of the grant of the patent: **15.10.2025**
(21) Application number: 22192394.9
(22) Date of filing: 26.08.2022
(51) Int. Cl.: B64D 11/00, A47B 96/04, E04B 2/74, E06B 9/24, G03B 21/58, G03B 21/608

(54) **DRY MIST PARTITION**
TROCKENNEBEL-TRENNWAND
CLOISON À BROUILLARD SEC

(30) Priority: 27.08.2021 US 202117446231
(43) Date of publication of application: 01.03.2023
(73) Proprietor: The Boeing Company, Arlington, VA 22202 (US)
(72) Inventor: VANDEWALL, Cynthia Anne, CHICAGO, 60606-1596 (US); BOWEN, Jared Arthur, CHICAGO, 60606-1596 (US); RAMIREZ LOAIZA, Juan Sebastian, CHICAGO, 60606-1596 (US)
(74) Representative: Arnold & Siedsma

(56) References cited:
- EP-A1- 0 503 289
- KR-A- 20190 060 748
- US-A1- 2014 362 347
- US-A1- 2017 283 065
- US-A1- 2021 070 448
- US-B2- 9 073 640

## Description

### BACKGROUND INFORMATION

### 1. Field:

The present disclosure relates generally to airplane cabins, and more specifically, to generating a dry mist onto which light is projected to create an opaque visual barrier to divide sections of an airplane cabin.

### 2. Background:

Space within an airplane cabin is valuable and limited. Airlines look for ways to squeeze additional value out of limited space while maintaining some semblance of separation and privacy for those onboard. Current methods for creating this perception are physical in nature, including elements such as doors, screens, partitions and curtains. Typically, curtains or other dividers are used to separate seating classes. Doors are used on some premium suites, and curtains close off the galley areas.

US 2014/0362347 A1, according to its abstract, states that a passenger vehicle includes a dynamic display unit. The dynamic display unit creates a temporary graphic display inside the passenger vehicle for presenting informational and control elements to passengers inside the passenger vehicle. The dynamic display unit includes a particle-screen generator configured to move water vapor generally along a plane to form a vapor screen.

KR 2019 0060748 A, according to its abstract, states a virtual golf simulation apparatus using a transmissive screen, which comprises a controller and a screen. When a user hits an actual ball, the controller performs simulation on a trajectory of a virtual ball on the basis of a hitting result of the user with respect to the actual ball. A screen displays a background screen in which a virtual golf is played, and the virtual ball moving along the simulated trajectory. The screen is a transmissive type to allow the actual ball hit by the user to pass therethrough. The virtual ball is displayed on the screen to be moved along the simulated trajectory when the actual ball hit by the user reaches the screen to pass therethrough. The screen includes a spraying unit, a collecting unit and a supplying unit, which displays an image through a screen membrane using fog.

EP 0 503 289 A1, according to its abstract, states a method and apparatus for forming a fog screen for use in the projection for display of an optical image which comprises disposing a pair of substantially parallel air curtains and blowing a fog into the space defined by and between the air curtains. The fog screen is high and uniform in density and can be utilized for forming a well-defined image thereon that is free from distortions or interruptions.

US 2017/0283065 A1, according to its abstract, states an aircraft interior surface for partitioning, dividing, or establishing privacy within a cabin space including a transparent material that provides for transmission of light within the aircraft cabin. A graphical design may be applied to the transparent material, the graphical design including indicia arranged in predetermined patterns based on a location or function of the transparent material. A light source located proximate to the transparent material may wash light across a surface of the transparent material such that the graphical design exhibits predetermined properties when illuminated by the light source. The transparent material may be selectively dimmable to increase opacity.

US 9 073 640 B2, according to its abstract, states an aircraft with at least one passenger cabin that comprises at least one door entry area for the passengers and for the flight attendants that is visually separated from the passenger cabin and referred to as a space unit. Variable or mobile elements assigned to at least one partition wall/one monument of the space element can be arranged in the space unit that can be used as a disposition zone during the flight phase in order to realize working areas or service and/or comfort facilities for passengers or for the flight attendants.

US 2021/0070448 A1, according to its abstract, states aircraft partitions including a body panel and a partition mounting portion that selectively and removably couples the body panel to an aircraft passenger cabin. The body panel may indicate a transition between a first section of an aircraft passenger cabin and a second section of the aircraft passenger cabin, and at least a portion of the body panel may be an electrochromic region that comprises an electrochromic material. The electrochromic region may have a selectively adjustable transparency and/or may display information and/or entertainment to passengers. Aircraft may include such an aircraft partition and an aircraft mounting portion for selectively and removably coupling the aircraft partition to the aircraft passenger cabin via the partition mounting portion. Methods of reconfiguring an aircraft passenger cabin may include removing a first aircraft partition from a first aircraft mounting portion of the aircraft passenger cabin and installing a second aircraft partition at the first aircraft mounting portion.

Therefore, it would be desirable to have a method and apparatus that take into account at least some of the issues discussed above, as well as other possible issues.

### SUMMARY

The present disclosure relates to an airplane cabin partition system according to claim 1, and a method for creating a partition in an airplane cabin according to claim 11.

The present disclosure provides the following illustrative examples, that are useful for understanding the claimed subject-matter. It is emphasized that the scope of protection is determined by the appended claims.

An illustrative example not within the scope of the claims provides a visual partition system. The system comprises a number of dry mist dispensers that generate a particle curtain comprising liquid micro-droplets. A gutter system collects liquid from the particle curtain, and at least one vacuum extractor is operably coupled to the gutter system. A liquid recirculation system collects liquid from the gutter system via the at least one vacuum extractor and returns it to the dry mist dispensers for reuse of the liquid.

There is provided an airplane cabin partition system. The system comprises a frame connected to an interior of an airplane cabin and a number of water dispensers connected to the frame, wherein the water dispensers dispense a dry mist curtain. A light projector renders the dry mist curtain opaque by projecting light onto the dry mist. A gutter system coupled to the frame and collects water from the dry mist, and at least one vacuum extractor is operably coupled to the gutter system, such that the dry mist curtain is generally contained within an area defined by the frame. A water recirculation system collects water from the gutter system via the at least one vacuum extractor and return it to the water dispensers for reuse of the water.

There is also provided a method for creating a partition in an airplane cabin. The method comprises generating a particle curtain from a number of dry mist dispensers and projecting light on the particle curtain with a light projector to render an opaque particle curtain. Liquid from the particle curtain is collected and recirculated back to the dry mist dispensers.

The features and functions can be achieved independently in various examples of the present disclosure or may be combined in yet other examples in which further details can be seen with reference to the following description and drawings. Another illustrative example not within the scope of the claims provides a visual partition system, comprising:
a number of dry mist dispensers that generate a particle curtain comprising liquid micro-droplets;
a gutter system configured to collect liquid from the particle curtain;
at least one vacuum extractor operably coupled to the gutter system; and
a liquid recirculation system configured to collect liquid from the gutter system via the at least one vacuum extractor and return it to the dry mist dispensers for reuse of the liquid.

The visual partition system may further comprise a light projector configured to project light onto the particle curtain to render the particle curtain opaque.

The light projector may be further configured to project an image or video on the particle curtain to render a graphical particle curtain.

The light projector may be further configured to modify the graphical particle curtain based on at least one flight characteristic of an aircraft on which the visual partition system is installed.

The light projector may be further configured to project colored light on the particle curtain render a colored particle curtain.

The light projector may be further configured to modify the color of the colored particle curtain based on at least one flight characteristic of an aircraft on which the visual partition system is installed.

The visual partition system may further comprise a frame supporting the dry mist dispensers, gutter system, and vacuum extractor, such that the particle curtain is generally contained within an area defined by the frame when in operation.

The visual partition system may further comprise:
a controller for controlling the liquid recirculation system; and
a touchless-control user interface communicatively coupled to the controller for user control of the visual partition system.

The visual partition system may further comprise a controller for controlling the liquid recirculation system onboard an airplane, wherein the controller is communicatively coupled to an airplane system (230) of the airplane for controlling the visual partition system based on at least one flight characteristic.

The particle curtain may form a visual barrier between different sections of an aircraft cabin.

The micro-droplets may be less than 10 microns in diameter.

There is provided an airplane cabin partition system comprising:
a frame connected to an interior of an airplane cabin;
a number of water dispensers connected to the frame, wherein the water dispensers dispense a dry mist curtain;
a light projector that renders the dry mist curtain opaque by projecting light onto the dry mist;
a gutter system coupled to the frame and configured to collect water from the dry mist;
at least one vacuum extractor operably coupled to the gutter system, such that the dry mist curtain is generally contained within an area defined by the frame; and
a water recirculation system configured to collect water from the gutter system via the at least one vacuum extractor and return it to the water dispensers for reuse of the water.

The light projector may be further configured to project an image or video on the dry mist curtain to render a graphical dry mist curtain.

The airplane cabin partition system may further comprise a controller for controlling the water recirculation system onboard the airplane, wherein the control unit is communicatively coupled to an airplane system of the airplane for controlling the cabin partition system based on at least one flight characteristic.

The airplane cabin partition system may further comprise a gesture-controlled user interface.

The cabin partition forms a visual barrier between different sections of the airplane cabin.

The dry mist may comprise micro-droplets of less than 10 microns in diameter.

The frame may be detachably connected to the interior of an airplane cabin. There is also provided a method for creating a partition in an airplane cabin, the method comprising:
generating a particle curtain from a number of dry mist dispensers;
projecting light on the particle curtain with a light projector to render an opaque particle curtain;
collecting liquid from the particle curtain; and
recirculating the collected liquid back to the dry mist dispensers.

The method may further comprise controlling at least one aspect of the particle curtain based on at least one flight characteristic.

The method may further comprise controlling at least one aspect of the cabin partition via a touchless-control user interface.

Collecting the liquid may further comprise collecting the liquid with a gutter system. The liquid may be collected with at least one vacuum extractor operably coupled to the gutter system.

The method may further comprise filtering the collected fluid before recirculating the fluid back to the dry mist dispensers.

Projecting light on the particle curtain may further comprise projecting, with the light projector, an image or video on the particle curtain to render a graphical particle curtain.

The method may further comprise modifying the graphical particle curtain based on at least one flight characteristic.

Projecting light on the particle curtain may comprise projecting colored light on the particle curtain to render a colored particle curtain.

The method may further comprise modifying the color of the colored particle curtain based on at least one flight characteristic.

The particle curtain may comprise micro-droplets (214) of less than 10 microns in diameter.

Another illustrative example not within the scope of the claims provides a visual partition system, comprising:
a number of dry mist dispensers that generate a particle curtain comprising liquid micro-droplets;
a gutter system configured to collect liquid from the particle curtain;
at least one vacuum extractor operably coupled to the gutter system; and
a liquid recirculation system configured to collect liquid from the gutter system via the at least one vacuum extractor and return it to the dry mist dispensers for reuse of the liquid.

The visual partition system may further comprise a light projector configured to project light onto the particle curtain to render the particle curtain opaque.

The light projector may be further configured to project an image or video on the particle curtain to render a graphical particle curtain.

The light projector may be further configured to modify the graphical particle curtain based on at least one flight characteristic of an aircraft on which the visual partition system is installed.

### BRIEF DESCRIPTION OF THE DRAWINGS

The scope of protection is set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in which an illustrative example may be implemented;
**Figure 2** depicts a block diagram illustrating a dry mist partition for use in an airplane cabin in accordance with an illustrative example;
**Figure 3** depicts a perspective view of a dry mist partition in accordance with an illustrative example;
**Figure 4** depicts an exploded view of a dry mist partition in accordance with an illustrative example;
**Figure 5A** depicts a dry mist partition with an image projected on the mist in accordance with an illustrative example;
**Figure 5B** depicts deactivation of the image projection on a dry mist in response to a control gesture in accordance with an illustrative example;
**Figure 6** depicts a flowchart illustrating a process of creating a visual partition in an airplane cabin in accordance with an illustrative example;
**Figure 7** is an illustration of an aircraft manufacturing and service method in a form of a block diagram in accordance with an illustrative example; and
**Figure 8** is an illustration of an aircraft in a form of a block diagram in which an illustrative example may be implemented.

### DETAILED DESCRIPTION

The illustrative examples recognize and take into account one or more different considerations. The illustrative examples recognize and take into account that space within an airplane cabin is valuable and limited. Airlines look for ways to squeeze additional value out of limited space while maintaining some semblance of separation and privacy for those onboard.

The illustrative examples recognize and take into account that current methods for creating this perception are physical in nature, including elements such as doors, screens, partitions and curtains. The illustrative examples recognize and take into account that such physical dividers can become barriers to egress and have the potential to present liabilities in emergency situations, forcing them to be stowed in open configurations for taxi, takeoff, and landing.

The illustrative examples recognize and take into account that physical dividers add weight, are difficult to move or reconfigure, and can be damaged over time. Physical dividers also cannot be easily modified or rebranded, generating waste as old components are thrown out and new ones installed.

The illustrative examples provide dry mist dispensers that create a curtain of liquid micro-droplets on which light can be projected. These dry mist dispensers utilize a technology that atomizes water in particles less than 10 microns in diameter (approximately 1/3 of a fog particle). The sensation generated is completely dry to the touch, meaning people can safely walk through the mist without harm, temporarily breaking the mist particles and projected images. The dry mist partition framework houses a system that collects the dispensed mist using a gutter system and extractors that create a vacuum. The captured water is then filtered and cleaned before it is circulated back to the source.

The partition system includes a projector that uses light to render the dry mist opaque, completing the perceived visual division. Both images and video can be projected to further enhance the experience by communicating the state of the flight or other brand-centric content. Alternatively, solid colors can be projected onto the mist. Connection to the airplane enables the system to be logically controlled so that the dry mist partition automatically stops during take-off, landing, or emergencies.

The dry mist partition can also be used as a communication tool, clearly identifying when a space is "closed" or "off limits." For example, flight attendants can close off galley spaces with clear messaging that creates privacy and provides a retreat during flight. During airplane boarding, this dry mist "wall" generates an enhanced passenger experience upon entry by closing off unsightly cabin features such as galleys and potentially providing a greeting or welcome sign.

Unlike current solutions that have to be physically moved, the dry mist partition may be turned on and off by a touch less-control (e.g., gesture) interface, requiring no physical exertion by the operator. For example, flight attendants might move their arms to turn the mist dispensers and the projected light on and off.

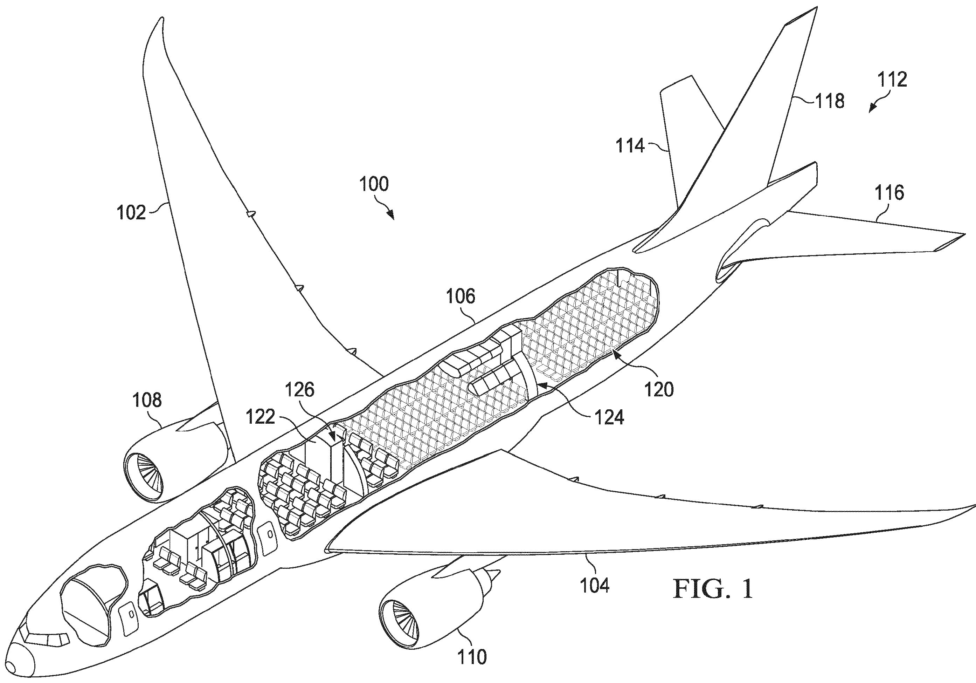

With reference now to the figures, and in particular, with reference to **Figure 1****,** an illustration of an aircraft is depicted in accordance with an illustrative example. In this illustrative example, aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft in which particle curtain partitions can be used to divide different sections and compartments within passenger cabin **120** in body **106.** Passenger cabin **120** might comprise a number of sections such as first class, business class, and economy. These sections are separated by bulkheads **122, 124** that include passageways **126** allowing movement between different sections of passenger cabin **120.**

Dry mist partitions may be mounted on bulkheads **122, 124** within passageways **126** to provide privacy between cabin sections as well as for other sections of passenger cabin **120** such galley areas.

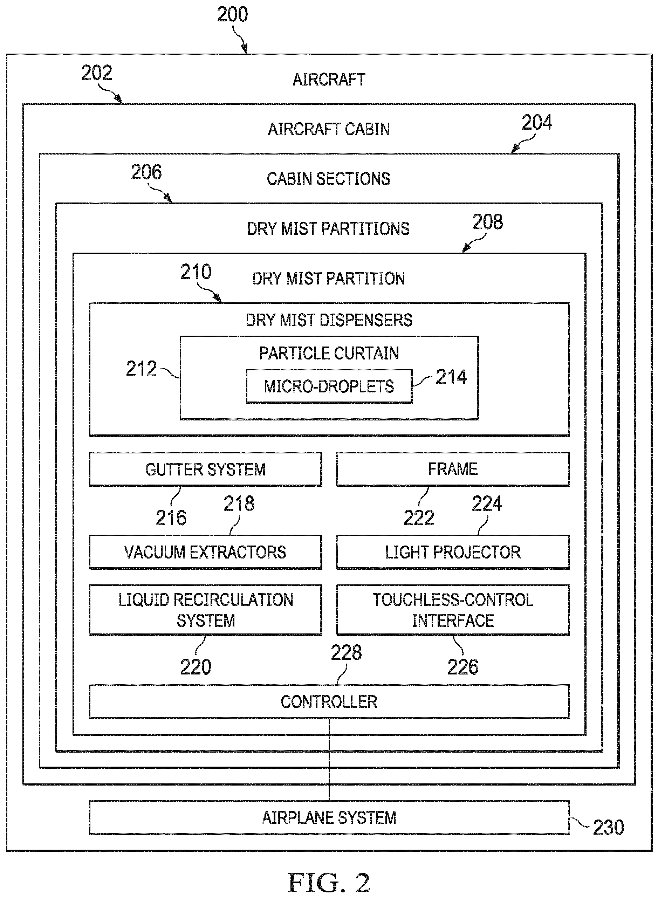

**Figure 2** depicts a block diagram illustrating a dry mist partition for use in an airplane cabin in accordance with an illustrative example. Aircraft **200** may be an example of aircraft **100** shown in **Figure 1** and contain an aircraft cabin **202** such as passenger cabin **120.**

Aircraft cabin **202** may be divided into a number of cabin section **204** by respective dry mist partitions **206.** Each dry mist partition **208** comprises a number of dry mist dispensers **210,** which generate a dry mist particle curtain **212** comprising micro-droplets **214.** Dry mist dispensers **210** may be connected to frame **222,** which provides the boundaries of particle curtain **212.**

Gutter system **216** is connected to frame **222** and collects the liquid from the particle curtain **212.** Vacuum extractors **218** coupled to gutter system **216** also collect liquid and help to generally contain the dry mist within frame **222.** Liquid recirculation system **220** recirculates liquid collected by gutter system **216** and vacuum extractors **218** back to the dry mist dispensers **210.**

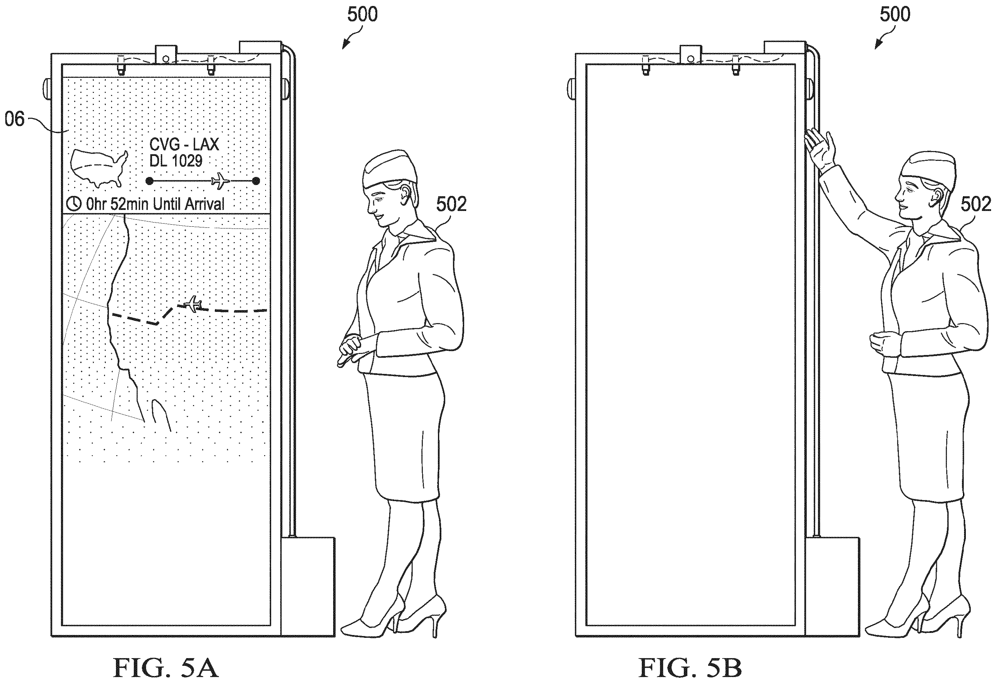

Light projector **224** projects light onto particle curtain **212,** which renders the dry mist visually opaque, appearing for all intents and purposes as a solid barrier. Light projector **224** may be configured to project a solid color (which might change during different phases of flight) or specific images or video onto the particle curtain **212** (see **Figure 5A**).

Dry mist partition **208** is controlled by controller **228.** Controller **228** may be activated by touch less-control interface **226,** which allows a user to control light projector **224** and turn dry mist partition **208** on and off. Touchless-control interface **226** enables control of the system without physical contact, such as when the user's hands are full. Example of touchless control include hand gestures, breaking an infrared beam, facial recognition, and voice control. Controller **228** also controls liquid recirculation system **220** onboard aircraft **200.**

Controller **228** may also be communicatively coupled to an airplane system **230** of aircraft **200** for controlling dry mist partition **208** based on at least one flight characteristic (e.g., turning dry mist partition **208** off during particular flight phases).

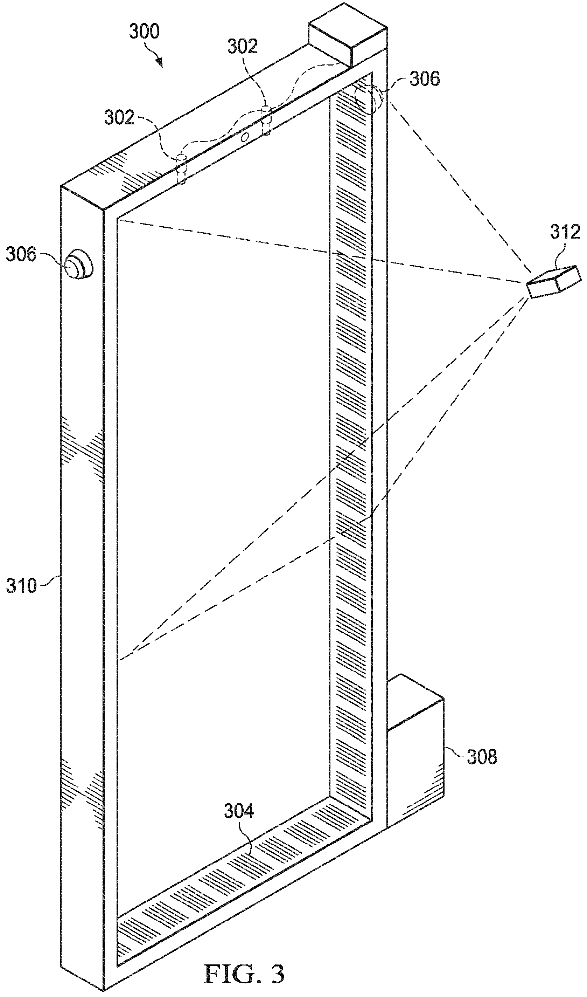

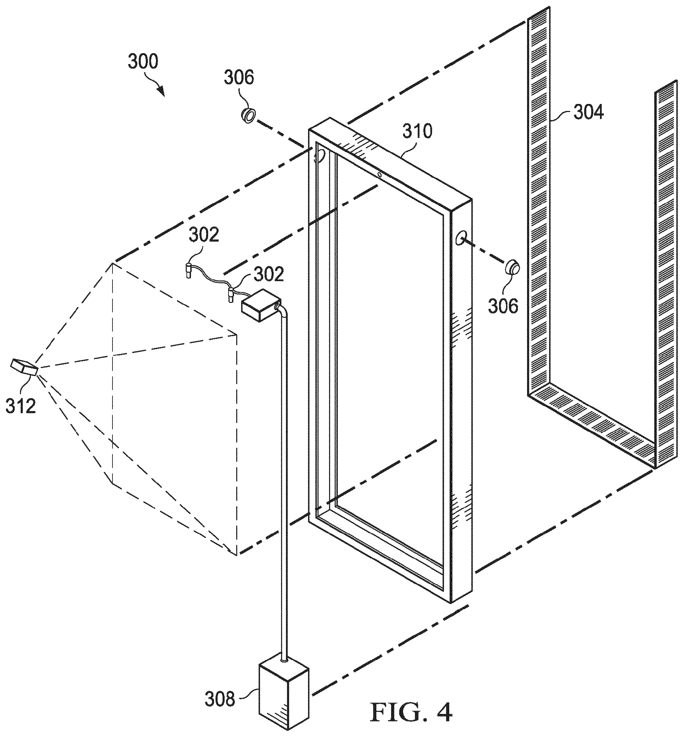

**Figure 3** depicts a perspective view of a dry mist partition in accordance with an illustrative example. **Figure 4** depicts an exploded view of a dry mist partition in accordance with an illustrative example. Dry mist visual partition **300** is an example of dry mist partition **208** in **Figure 2****.**

Dry mist visual partition **300** comprises a number of dry mist dispensers **302** that generate a particle curtain comprising liquid micro-droplets less than ten microns in diameter. A gutter system **304** is configured to collect liquid (water) from the dry mist particle curtain. Vacuum extractors **306** are operably coupled to the gutter system **304.**

Frame **310** supports the dry mist dispensers **302,** gutter system **304,** and vacuum extractors **306** such that the particle curtain is generally contained within an area defined by the frame **310** when in operation. Frame **310** is detachably connected to the interior of an airplane cabin. For example, frame **310** may be detachably connected to a bulkhead dividing the airplane cabin into different sections, wherein the particle curtain forms a visual barrier between different sections of the aircraft cabin.

Water recirculation system **308** is configured to collect liquid from the gutter system **304** via vacuum extractors **306** and return it to the dry mist dispensers **302** for reuse of the liquid.

Light projector **312** renders the dry mist particle curtain opaque by projecting light onto the dry mist. Light projector **312** may be configured to project colored light on the particle curtain render a colored particle curtain. Alternatively, light projector **312** may also be configured to project an image or video on the particle curtain to render a graphical dry mist curtain. Light projector may be further configured to modify the light color or graphical dry mist curtain based on at least one flight characteristic of the aircraft on which the visual partition system is installed.

**Figure 5A** depicts a dry mist partition with an image projected on the mist in accordance with an illustrative example. **Figure 5B** depicts deactivation of the image projection on a dry mist in response to a control gesture in accordance with an illustrative example. **Figures 5A** and **5B** illustrate an example of the operation of a touch less-control interface such as touch less-control interface **226** in **Figure 2****.**

In **Figure 5A** a visual display **506** is projected onto a dry mist in visual partition **500.** In the present example, an image of the airplane's flight status and route is projected on the dry mist, thereby creating an opaque visual barrier. As shown in **Figure 5B****,** in response to a gesture by flight attendant **502,** the image and dry mist are turned off.

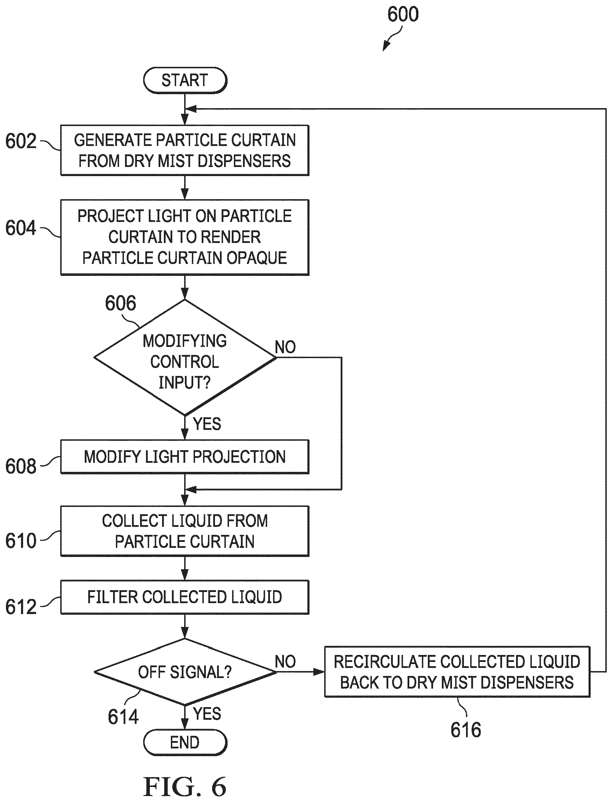

**Figure 6** depicts a flowchart illustrating a process of creating a visual partition in an airplane cabin in accordance with an illustrative example. Process **600** may be implemented using dry mist partition **208 in** **Figure 2** and dry mist visual partition **300** shown in **Figure 3** and **4****.**

Process **600** begins by generating a particle curtain from a number of dry mist dispensers (step **602**). The particle curtain comprises micro-droplets of less than 10 microns in diameter. At least one aspect of the particle curtain can be controlled based on at least one flight characteristic of the aircraft in which it is installed. For example, the dry mist partition automatically may stop during take-off, landing, or emergencies.

Light is projected on the particle curtain with a light projector to render an opaque particle curtain (step **604**). The light projector may project an image or video on the particle curtain to render it a graphical curtain, which may be modified based on at least one flight characteristic. The light projector may also project a solid color on the particle curtain, thereby rendering a colored particle curtain. As with the image projection, the color of the colored particle curtain may be modified based on at least one flight characteristic.

Process **600** continually monitors for modifying control input to the light projector (step **606**). At least one aspect of the visual partition may be controlled via a touchless-control user interface. This control may include, e.g., turning the light projector on or off or changing the image or color projected onto the particle curtain by the projector. If a modify input is receive, the system modifies the light projection on the particle curtain (step **608**).

Liquid from the particle curtain is continually collected (step **610**) and may be filtered (step **612**) before recirculating the fluid back to the dry mist dispensers. The liquid may be collected with a gutter system and at least one vacuum extractor operably coupled to the gutter system.

If the system is left on (step **614**), the collected liquid is recirculated back to the dry mist dispensers (step **616**). If an off signal is received, the system stops and process **600** ends.

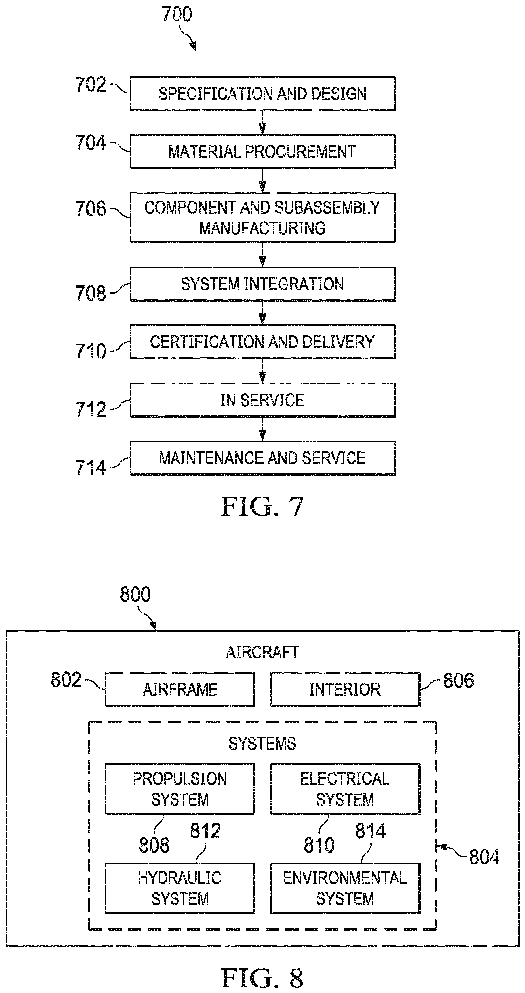

Illustrative examples of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method is depicted in accordance with an illustrative example. During pre-production, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft is depicted in which an illustrative example may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **700.** One or more illustrative examples may be manufactured or used during at least one of component and subassembly manufacturing **706,** system integration **708,** in service **712,** or maintenance and service **714** of **Figure 7****.**

As used herein, a first component "connected to" a second component means that the first component can be connected directly or indirectly to the second component. In other words, additional components may be present between the first component and the second component. The first component is considered to be indirectly connected to the second component when one or more additional components are present between the two components. When the first component is directly connected to the second component, no additional components are present between the two components.

As used herein, the phrase "a number" means one or more. The phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step. For example, one or more of the blocks may be implemented as program code.

In some alternative implementations of an illustrative example, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. An airplane cabin partition system (300), comprising:
a frame (310) connectable to an interior of an airplane cabin (120);
a number of water dispensers (302) connected to the frame, wherein the water dispensers dispense a dry mist curtain (212);
a light projector (312) for projecting light onto the dry mist curtain that renders the dry mist curtain opaque;
a gutter system (304) coupled to the frame and configured to collect water from the dry mist;
at least one vacuum extractor (306) operably coupled to the gutter system,
such that the dry mist curtain is generally contained within an area defined by the frame; and
a water recirculation system (308) configured to collect water from the gutter system via the at least one vacuum extractor and return it to the water dispensers for reuse of the water.

2. The airplane cabin partition system of claim 1, wherein the light projector is further configured to project an image or video (506) on the dry mist curtain to render a graphical dry mist curtain.

3. The airplane cabin partition system of claim 1 or 2, further comprising a controller (228) for controlling the water recirculation system onboard the airplane, wherein the control unit is communicatively couplable to an airplane system (230) of the airplane for controlling the cabin partition system based on at least one flight characteristic.

4. The airplane cabin partition system of claim 3, further comprising a gesture-controlled user interface.

5. The airplane cabin partition system of any of claims1-3, wherein the cabin partition is able to form a visual barrier between different sections (204) of the airplane cabin.

6. The airplane cabin partition system of any of the preceding claims, wherein the light projector is configured to modify the dry mist curtain based on at least one flight characteristic of an aircraft.

7. The airplane cabin partition system of any of the preceding claims, wherein the light projector is configured to project colored light on the dry mist curtain to render the dry mist curtain colored.

8. The airplane cabin partition system of claim 6, wherein the light projector is configured to modify the color of the dry mist curtain based on at least one flight characteristic of an aircraft.

9. The airplane cabin partition system of any of the preceding claims, wherein the dry mist curtain is formed of micro-droplets less than 10 microns in diameter.

10. The airplane cabin partition system of any of the preceding claims, wherein the frame is detachably connectable.

11. A method for creating a partition in an airplane cabin, the method comprising:
generating a particle curtain from a number of dry mist dispensers;
projecting light on the particle curtain with a light projector to render an opaque particle curtain;
collecting liquid from the particle curtain; and
recirculating the collected liquid back to the dry mist dispensers.

12. The method of claim 11, further comprising controlling at least one aspect of the particle curtain based on at least one flight characteristic.

13. The method of claim 11 or 12, further comprising controlling at least one aspect of the cabin partition via a touchless-control user interface.

14. The method of any of the claims 11-13, wherein collecting the liquid further comprises collecting the liquid with a gutter system.

15. The method of claim 14, wherein the liquid is collected with at least one vacuum extractor operably coupled to the gutter system.

## Patentansprüche

1. Flugzeugkabinentrennwandsystem (300), umfassend:
einen Rahmen (310), der mit einem Inneren einer Flugzeugkabine (120) verbindbar ist;
eine Anzahl von Wasserspendern (302), die mit dem Rahmen verbunden sind, wobei die Wasserspender einen Trockennebelvorhang (212) abgeben;
einen Lichtprojektor (312) zum Projizieren von Licht auf den Trockennebelvorhang, was den Trockennebelvorhang undurchsichtig darstellt;
ein Rinnensystem (304), das mit dem Rahmen gekoppelt und konfiguriert ist, um Wasser aus dem Trockennebel zu sammeln;
mindestens einen Vakuumextraktor (306), der mit dem Rinnensystem derart wirkgekoppelt ist, dass der Trockennebelvorhang im Allgemeinen innerhalb eines Bereichs, der durch den Rahmen definiert ist, enthalten ist; und
ein Wasserrezirkulationssystem (308), das konfiguriert ist, um Wasser aus dem Rinnensystem über den mindestens einen Vakuumextraktor zu sammeln und es zur Wiederverwendung des Wassers an die Wasserspender rückzuführen.

2. Flugzeugkabinentrennwandsystem nach Anspruch 1, wobei der Lichtprojektor ferner konfiguriert ist, um ein Bild oder Video (506) auf den Trockennebelvorhang zu projizieren, um einen grafischen Trockennebelvorhang darzustellen.

3. Flugzeugkabinentrennwandsystem nach Anspruch 1 oder 2, ferner umfassend eine Steuervorrichtung (228) zum Steuern des Wasserrezirkulationssystems an Bord des Flugzeugs, wobei die Steuereinheit mit einem Flugzeugsystem (230) des Flugzeugs zum Steuern des Kabinentrennwandsystems basierend auf mindestens einem Flugmerkmal kommunikativ koppelbar ist.

4. Flugzeugkabinentrennwandsystem nach Anspruch 3, ferner umfassend eine gestengesteuerte Benutzerschnittstelle.

5. Flugzeugkabinentrennwandsystem nach einem der Ansprüche 1 bis 3, wobei die Kabinentrennwand eine Sichtbarriere zwischen verschiedenen Abschnitten (204) der Flugzeugkabine bilden kann.

6. Flugzeugkabinentrennwandsystem nach einem der vorstehenden Ansprüche, wobei der Lichtprojektor konfiguriert ist, um den Trockennebelvorhang basierend auf mindestens einem Flugmerkmal eines Flugzeugs zu modifizieren.

7. Flugzeugkabinentrennwandsystem nach einem der vorstehenden Ansprüche, wobei der Lichtprojektor konfiguriert ist, um farbiges Licht auf den Trockennebelvorhang zu projizieren, um den Trockennebelvorhang farbig darzustellen.

8. Flugzeugkabinentrennwandsystem nach Anspruch 6, wobei der Lichtprojektor konfiguriert ist, um die Farbe des Trockennebelvorhangs basierend auf mindestens einem Flugmerkmal eines Flugzeugs zu modifizieren.

9. Flugzeugkabinentrennwandsystem nach einem der vorstehenden Ansprüche, wobei der Trockennebelvorhang aus Mikrotröpfchen mit einem Durchmesser von weniger als 10 Mikrometern gebildet wird.

10. Flugzeugkabinentrennwandsystem nach einem der vorstehenden Ansprüche, wobei der Rahmen lösbar verbindbar ist.

11. Verfahren zum Schaffen einer Trennwand in einer Flugzeugkabine, das Verfahren umfassend: Erzeugen eines Teilchenvorhangs aus einer Anzahl von Trockennebelspendern; Projizieren von Licht auf den Teilchenvorhang mit einem Lichtprojektor, um einen undurchsichtigen Teilchenvorhang darzustellen;
Sammeln von Flüssigkeit aus dem Teilchenvorhang; und
Rezirkulierenlassen der gesammelten Flüssigkeit zurück zu den Trockennebelspendern.

12. Verfahren nach Anspruch 11, ferner umfassend das Steuern mindestens eines Aspekts des Teilchenvorhangs basierend auf mindestens einem Flugmerkmal.

13. Verfahren nach Anspruch 11 oder 12, ferner umfassend das Steuern mindestens eines Aspekts der Kabinentrennwand über eine berührungslos steuerbare Benutzerschnittstelle.

14. Verfahren nach einem der Ansprüche 11 bis 13, wobei das Sammeln der Flüssigkeit ferner das Sammeln der Flüssigkeit mit einem Rinnensystem umfasst.

15. Verfahren nach Anspruch 14, wobei die Flüssigkeit mit mindestens einem Vakuumextraktor, der mit dem Rinnensystem wirkgekoppelt ist, gesammelt wird.

## Revendications

1. Système de cloison de cabine d'avion (300), comprenant :
un cadre (310) pouvant être relié à un intérieur d'une cabine d'avion (120) ;
un certain nombre de distributeurs d'eau (302) reliés au cadre, dans lequel les distributeurs d'eau distribuent un rideau de brume sèche (212) ;
un projecteur de lumière (312) destiné à projeter une lumière sur le rideau de brume sèche afin de rendre le rideau de brume sèche opaque ;
un système collecteur (304) accouplé au cadre et conçu pour collecter de l'eau à partir de la brume sèche ;
au moins un extracteur à vide (306) accouplé de manière fonctionnelle au système collecteur, de sorte que le rideau de brume sèche est généralement contenu à l'intérieur d'une zone définie par le cadre ; et
un système de recirculation d'eau (308) conçu pour collecter de l'eau à partir du système collecteur par l'intermédiaire de l'au moins un extracteur à vide et la renvoyer aux distributeurs d'eau pour une réutilisation de l'eau.

2. Système de cloison de cabine d'avion selon la revendication 1, dans lequel le projecteur de lumière est en outre conçu pour projeter une image ou une vidéo (506) sur le rideau de brume sèche afin d'obtenir un rideau de brume sèche graphique.

3. Système de cloison de cabine d'avion selon la revendication 1 ou 2, comprenant en outre un dispositif de commande (228) destiné à commander le système de recirculation d'eau à bord de l'avion, dans lequel l'unité de commande est accouplée de manière communicative à un système d'avion (230) de l'avion afin de commander le système de cloison de cabine sur la base d'au moins une caractéristique de vol.

4. Système de cloison de cabine d'avion selon la revendication 3, comprenant en outre une interface utilisateur commandée par le geste.

5. Système de cloison de cabine d'avion selon l'une quelconque des revendications 1 à 3, dans lequel la cloison de cabine peut former une barrière visuelle entre de différentes sections (204) de la cabine d'avion.

6. Système de cloison de cabine d'avion selon l'une quelconque des revendications précédentes, dans lequel le projecteur de lumière est conçu pour modifier le rideau de brume sèche sur la base d'au moins une caractéristique de vol d'un aéronef.

7. Système de cloison de cabine d'avion selon l'une quelconque des revendications précédentes, dans lequel le projecteur de lumière est conçu pour projeter une lumière colorée sur le rideau de brume sèche afin de rendre le rideau de brume sèche coloré.

8. Système de cloison de cabine d'avion selon la revendication 6, dans lequel le projecteur de lumière est conçu pour modifier la couleur du rideau de brume sèche sur la base d'au moins une caractéristique de vol d'un aéronef.

9. Système de cloison de cabine d'avion selon l'une quelconque des revendications précédentes, dans lequel le rideau de brume sèche est formé de micro-gouttelettes d'un diamètre inférieur à 10 microns.

10. Système de cloison de cabine d'avion selon l'une quelconque des revendications précédentes, dans lequel le cadre peut être relié de manière amovible.

11. Procédé de création d'une cloison dans une cabine d'avion, le procédé comprenant : la génération d'un rideau de particules à partir d'un certain nombre de distributeurs de brume sèche ; la protection d'une lumière sur le rideau de particules à l'aide d'un projecteur de lumière afin de rendre le rideau de particules opaque ;
la collecte de liquide à partir du rideau de particules ; et
la recirculation du liquide collecté vers les distributeurs de brume sèche.

12. Procédé selon la revendication 11, comprenant en outre la commande d'au moins un aspect du rideau de particules sur la base d'au moins une caractéristique de vol.

13. Procédé selon la revendication 11 ou 12, comprenant en outre la commande d'au moins un aspect de la cloison de cabine par l'intermédiaire d'une interface utilisateur à commande sans contact.

14. Procédé selon l'une quelconque des revendications 11 à 13, dans lequel la collecte du liquide comprend en outre la collecte du liquide à l'aide d'un système collecteur.

15. Procédé selon la revendication 14, dans lequel le liquide est collecté à l'aide d'au moins un extracteur à vide accouplé de manière fonctionnelle au système collecteur.
